# EUROPEAN PATENT SPECIFICATION

(11) **EP 3 663 660 B1**
(45) Date of publication and mention of the grant of the patent: **13.03.2024**
(21) Application number: 18860635.4
(22) Date of filing: 10.09.2018
(51) Int. Cl.: F24F 11/30, F24F 11/64, F24F 11/61, F24F 11/62, F24F 110/12, F24F 110/64, F24F 110/10, F24F 110/20, F24F 120/10, F24F 110/65, F24F 120/12

(54) **AIR CONDITIONING APPARATUS**
KLIMAANLAGE
APPAREIL DE CLIMATISATION

(30) Priority: 27.09.2017 KR 20170124882
(43) Date of publication of application: 10.06.2020
(73) Proprietor: Samsung Electronics Co., Ltd., Suwon-si, Gyeonggi-do 16677 (KR)
(72) Inventor: TAE, Sang-jin, Suwon-si Gyeonggi-do 16677 (KR); YOON, Hyun-jin, Suwon-si Gyeonggi-do 16692 (KR); LEE, Je-hyeon, Suwon-si Gyeonggi-do 16677 (KR); CHOI, Dong-suk, Suwon-si Gyeonggi-do 16677 (KR)
(74) Representative: Gulde & Partner
(86) International application number: PCT/KR2018/010540
(87) International publication number: WO 2019/066301

(56) References cited:
- WO-A1-2016/106287
- WO-A1-2016/186417
- WO-A2-2012/068591
- JP-A- H0 658 591
- JP-A- 2009 293 847
- JP-A- 2010 286 190
- JP-A- 2017 067 427
- KR-A- 20150 145 259
- KR-A- 20160 010 982
- KR-A- 20160 134 454
- KR-B1- 100 696 122
- KR-B1- 101 571 806
- KR-B1- 101 757 446
- US-A1- 2016 018 124

## Description

### [Technical Field]

The invention relates to an air conditioning apparatus, and more particularly, to an air conditioning apparatus modifying schedule information on the basis of collected environmental information.

### [Background Art]

An air conditioning apparatus is an apparatus placed in a space, such as a house, an office, a shop, or a crop-cultivating house, to control a temperature, a humidity, a degree of cleanliness, and a flow of air therein, thereby maintaining a comfortable indoor environment for people to live or a suitable indoor environment for crops to grow.

Conventionally, a process of directly receiving a user's command is required to control the air conditioning apparatus. In addition, a technique is used to control a mode of the air conditioning apparatus such that the air conditioner is changed to be in a power-on or power-off state at a specific time. To do this, however, the user needs to input a time and an operation state in person.

In addition, the conventional air conditioning apparatus determines an operation state and an output intensity based on a current temperature. In general, if the number of persons(in a room) increases, it is required to increase the output intensity to maintain a target temperature. The output intensity of the air conditioning apparatus needs to be stronger (or higher) in an air condition target where there are ten persons than in an air condition target where there is one person, to maintain a target temperature (e.g. 24 degrees), because the body temperatures of the persons cause a temperature of ambient air to rise.

However, the conventional air conditioning apparatus has a problem that it is not possible to predict a future change in the number of persons, and thus, it is not possible to control a temperature in advance.

KR 2016 0134454 A and JP 2017 067427 A are relevant prior art. Document JP 2017 067427 discloses an air conditioning apparatus comprising: a driver configured to perform a predetermined function of the air conditioning apparatus; a sensor configured to collect ambient environmental information of the air conditioning apparatus ; a memory configured to store a plurality of schedule information and the collected environmental information, and a processor configured to control the driver, and at the same time modify the initial schedule information based on environmental information collected during a predetermined period.

### [Disclosure]

### [Technical Problem]

The invention provides an air conditioning apparatus modifying schedule information on the basis of collected environmental information.

### [Technical Solution]

According to the present invention, an air conditioning apparatus is provided as defined in claim 1.

The processor may be configured to predict the operation state for each time zone from the classified environmental information for each time zone using a predetermined learning model.

The processor may be configured to modify the operation state for each time zone in the schedule information by determining an operation mode of the air conditioning apparatus and an output intensity in the operation mode for the each time zone on the basis of the predicted load for each time zone.

The processor may be configured to modify the operation state for each time zone in the schedule information on the basis of the predicted load for each time zone and spatial information of an air conditioning target.The environmental information may include at least one of an indoor temperature, an outdoor temperature, a humidity, the number of persons in an air conditioning target, or an amount of dust.

### [Description of Drawings]

FIG. 1 is a block diagram illustrating an air conditioning apparatus according to an embodiment not part of the invention.
FIG. 2 is a block diagram for explaining a specific configuration of the air conditioning apparatus of FIG. 1.
FIG. 3 is a block diagram for explaining a system controlling an air conditioning apparatus according to an embodiment not part of the invention.
FIGS. 4 to 7 are diagrams for explaining an amount of change in load depending on time according to an embodiment not part of the invention.
FIGS. 8 to 10 are diagrams for explaining an operation of collecting environmental information according to an embodiment not part of the invention.
FIG. 11 is a diagram for explaining a learning model according to an embodiment not part of the invention.
FIGS. 12 to 17 are diagrams for explaining schedule information.
FIG. 18 is a flowchart for explaining a control method of an air conditioning apparatus according to an embodiment of the invention.

### [Best Mode]

Before specifically describing the invention, a method not claimed but used for illustrating the specification and drawings will be described.

First of all, the terms used in the specification are general terms selected in consideration of the functions in the various embodiments of the invention, the invention being defined by the claims These terms may be construed as meanings defined in the specification and, may be construed based on the entire contents of the specification and the common technical knowledge in the art unless specifically defined, the relevant terms and definition of the invention being in the claims.

Also, the same reference numerals or marks described in each of the drawings attached to the specification denote parts or elements that perform substantially the same functions. For convenience of description and understanding, different embodiments will be described using the same reference numerals or marks. That is, although elements having the same reference numerals are all illustrated in a plurality of drawings, the plurality of drawings do not mean one embodiment.

Also, in the specification and the claims, terms including ordinal numbers such as "first" and "second" may be used to distinguish the elements from each other. These ordinals are used to distinguish identical or similar elements from each other, and the use of such ordinals should not be understood as limiting the meanings of the terms. As an example, elements combined with such ordinal numbers should not be limited in use order, arrangement order, or the like by the numbers. In the application, the term "include", "comprise" or the like indicates the presence of features, numbers, steps, operations, elements, parts, or combinations thereof described in the specification, but do not preclude the presence or addition of one or more other features, numbers, steps, operations, elements, parts, or combinations thereof.

The invention may be variously modified and have several embodiments as long as within the scope of the claims. Specific embodiments will be illustrated in the drawings and described in detail in the detailed description.

The terms "first", "second", and the like, may be used to describe various elements, but the elements are not to be construed as being limited by these terms. The terms are used only to distinguish one element from another element.

Terms used herein are used only to describe specific embodiments, and are not intended to limit the scope which is defined in the claims. In the application, the term "include", "comprise" or the like indicates the presence of features, numbers, steps, operations, elements, parts, or combinations thereof described in the specification, but do not preclude the presence or addition of one or more other features, numbers, steps, operations, elements, parts, or combinations thereof.

In the embodiments of the invention, the term "module", "unit", "part", or the like refers to an element that performs at least one function or operation.

Also, in the embodiments of the invention, when any part is described as being connected to another part, this includes not only a direct connection but also an indirect connection through another medium. When a certain part includes a certain element, unless explicitly described otherwise, this means that another element may be additionally included, rather than excluding another element.

Meanwhile, in the embodiments of the invention, the terms "load", "load information" and "load value" may all be used in a similar sense. Values of the collected environmental information are all in different units, and they can be converted into one representative value. Thus, the load means that the values of the collected environmental information are converted into one representative value. Through the load (load information, load value) converted in this way, a user may easily compare a current state of an air conditioning apparatus depending on time.

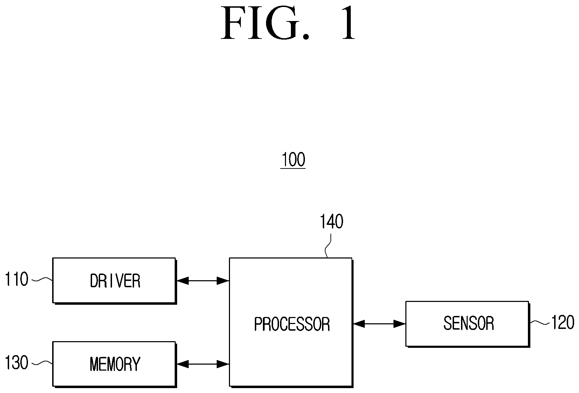

FIG. 1 is a block diagram illustrating an air conditioning apparatus 100 according to an embodiment not part of the invention.

Referring to FIG. 1, the air conditioning apparatus 100 includes a driver 110, a sensor 120, a memory 130, and a processor 140.

The air conditioning apparatus 100 is an apparatus placed in a space, such as a house, an office, a shop, or a crop-cultivating house, to control a temperature, a humidity, a degree of cleanliness, and a flow of air therein, thereby maintaining a comfortable indoor environment for people to live or a suitable indoor environment for crops to grow.

The driver 110 refers to a part that actually performs a predetermined function of the air conditioning apparatus 100 through the control of the processor 140. For example, when the processor 140 issues a control command to lower a temperature, the driver 110 may be a part performing a cooling function.

In addition, the driver 110 may be configured to perform various functions of the air conditioning apparatus 100, such as cooling, heating, and air cleaning. Here, the driver 110 is not limited to any specific function and may refer to a component of the air conditioning apparatus 100 that may be controlled by a user's command or by the processor 140.

The sensor 120 may measure a temperature, a humidity, a size and a form (structure) of a space, the number of persons, and activity states of the persons. Specifically, the size and the form (structure) of the space may be sensed to ascertain whether the air conditioning apparatus 100 is installed in a circle space or in a quadrangle space and to measure a wideness.

Here, the sensor 120 may measure both a temperature around an indoor unit and a temperature around an outdoor unit. In addition, the sensor 120 may determine body temperatures of persons in an air conditioning target around the indoor unit. For example, the sensor may measure and compare the body temperatures of the persons to determine whether the persons currently feel hot. Here, a thermal imaging camera or the like may be used to measure the body temperatures of the persons. However, it is not limited to the thermal imaging camera, and a heat sensor and a heat sensing camera that are capable of measuring a body temperature of a person may be used.

In addition, the sensor 120 collects ambient environmental information of the air conditioning apparatus 100. For example, the sensor 120 may check how many persons are present in a space where the air conditioning apparatus 100 is installed. Furthermore, the sensor 120 may check what motion is taken by a person. For example, the sensor 120 may check whether the person is running. If it is confirmed by the sensor that the person's motion is exercise, a temperature may be set to be lowered than that as currently set. For this operation, the sensor may use a motion sensor or a human body detection sensor.

In addition, the sensor 120 may measure a body temperature of a person using a heat sensor, a heat sensing camera, or the like. The body temperature of the person is measured by the sensor 120, and the processor 140 may determine whether the body temperature of the person is in such a degree that a predetermined operation state needs to be changed.

In addition, the sensor 120 may measure a body temperature for each of the persons in the air conditioning target. Accordingly, the air conditioning apparatus 100 may be controlled to direct wind toward a person having a higher body temperature.

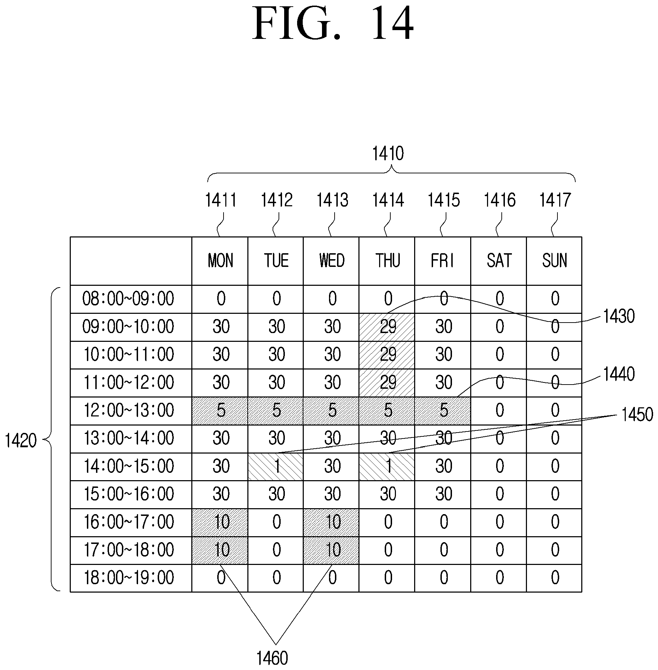

The memory 130 stores values measured by the sensor 120 therein. Here, the values measured by the sensor 120 may be stored in the memory 130 every predetermined time, and the predetermined time may vary depending on user's settings. Further, a storage cycle may be on a weekly basis. For example, the air conditioning apparatus 100 may operate in such a pattern that the values are stored for each classified time zone on each day of the week from Monday to Sunday. The detailed storage method will be described later with reference to FIG. 14.

In addition, the memory 130 may store a plurality of schedule information for each day of the week, and the processor 140 may control the driver 110 on the basis of schedule information corresponding to a current day of the week among the plurality of schedule information.

The memory 130 stores a plurality of initial schedule information, and the processor 140 may control an operation of the driver 110 on the basis of initial schedule information selected by a user among the plurality of initial schedule information.

The memory 130 may be implemented as a non-volatile memory, a volatile memory, a flash-memory, a hard disk drive (HDD), a solid state drive (SSD), or the like. Meanwhile, the memory 130 may be implemented not only as a storage medium in an electronic device but also as an external storage medium, e.g., a micro secure digital (SD) card, a universal serial bus (USB) memory, or a web server through a network.

Meanwhile, the processor 140 may control an operation of the driver 110 on the basis of schedule information in which an operation state is defined according to a time change, and modifies the schedule information on the basis of environmental information collected during a predetermined period.

Here, the schedule information may be information including environmental information stored for each hour and an operation state of the air conditioning apparatus 100 on the basis of the environmental information.

Here, the environmental information may include at least one of an indoor temperature, an outdoor temperature, a humidity, the number of persons in an air conditioning target, body temperatures of the persons, or an amount of dust. Here, the environmental information may be collected or measured by the sensor 120.

Here, the processor 140 modifies the schedule information by classifying the environmental information as stored in the memory 130 for each time zone, and comparing the classified environmental information for each time zone with an operation state for each time zone in the schedule information. The schedule information may be information including environmental information stored for each hour and an operation state of the air conditioning apparatus 100 on the basis of the environmental information.

The schedule information may be a set of control commands in which collected environmental information and information on operation states corresponding to the environmental information are arranged to correspond to time. For example, in schedule information on a daily basis, commands set to perform specific operations at specific times from morning to evening may be stored. Therefore, when the schedule information is applied to the air conditioning apparatus 100, the processor 140 may automatically control the air conditioning apparatus 100 even though the user does not personally control the air conditioning apparatus 100.

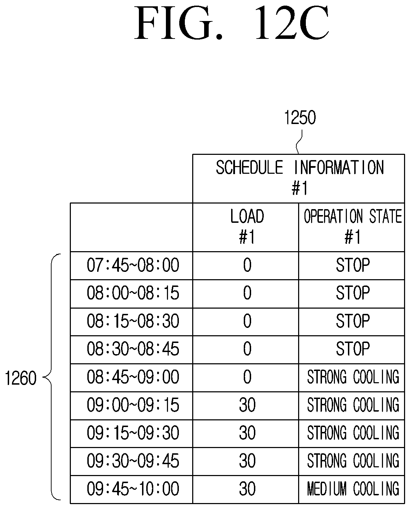

In addition, the schedule information may include environmental information stored for each hour and an operation state of the air conditioning apparatus 100 based on the environmental information, which will additionally be described later with reference to FIG. 12C.

Here, the environmental information may include at least one of an indoor temperature, an outdoor temperature, a humidity, the number of persons in an air conditioning target, or an amount of dust. Here, the environmental information may be collected or measured by the sensor 120.

Here, the operation state may include information on operation modes and output intensities. The operation modes may refer to different modes such as cooling, heating, blowing and air cleaning functions, and the output intensities may refer to different outputs in the same operation mode, such as cooling (strong), cooling (medium), and cooling (weak).

Here, the operation state is not limited to the operation modes and the output intensities, and may additionally include information on functions and operations. In addition, the operation modes and the output intensities are not limited to the above-described elements, and may include additional functions.

Here, the air conditioning apparatus 100 may determine an operation state on the basis of the collected environmental information and control the driver 110 of the air conditioning apparatus 100 according to the operation state.

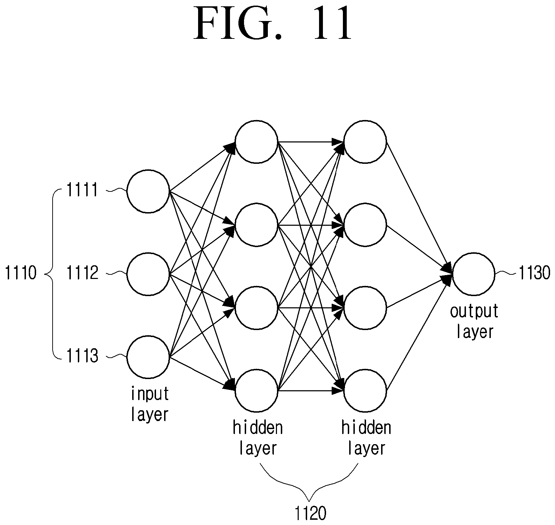

Here, the processor 140 may predict an operation state for each time zone from the environmental information for each time zone using a predetermined learning model. The predetermined learning model may be a classification system using a series of machine learning algorithms based on neural networks, which will be described in detail later with reference to FIG. 11.

Specifically, the processor 140 may predict a load for each time zone on the basis of the classified environmental information for each time zone. Here, the load may be predicted by various methods. One of the various methods may be a method of converting each data of the environmental information into an index. For example, if the number of persons is 30 and a current temperature is 27 degrees, +30 may be assigned for the number of persons and +5 may be assigned for the current temperature of 27 degrees. Here, a load may be 35. Each of the assigned numerical values may be changed according to user's settings.

The operation state for each time zone in the schedule information may be modified on the basis of the predicted load for each time zone. As in the above-described example, it is assumed that the current number of persons is 30 and the current temperature is 27 degrees. Here, the predicted load is 35 and an operation state may be determined to correspond to the load value of 35. The operation state may be set to a cooling (strong) mode, and the operation state corresponding to the load value of 35 may be changed according to user's settings.

Meanwhile, according to an embodiment not part of the invention, a load may be determined by combining a plurality of load information, not based only on information at a current time. For example, when it is assumed that a load at 9 o'clock yesterday is 35 and a load at 9 o'clock today is 30, a load tomorrow may be predicted to be 32.5, which is an average value of 35 and 30. Here, only the average value is exemplified, but a predicted load value may be determined through various mathematical methods.

In addition, the processor 140 may modify the operation state for each time zone in the schedule information by determining an operation mode of the air conditioning apparatus 100 and an output intensity in the operation mode based on the predicted load for each time zone.

For example, it is assumed through the above-described example that the predicted load is calculated as 32.5. However, if a load at the corresponding time is stored as 40 in the schedule information that is already applied to the air conditioning apparatus 100, there is a load difference of 7.5. If the air conditioning apparatus 100 operates according to the schedule information as set previously, the air conditioning apparatus 100 may waste energy. Therefore, the processor 140 may modify the load, the operation mode, the output intensity, and the like included in the schedule information on the basis of environmental information collected during a predetermined period.

In addition, the processor 140 may modify the operation state for each time zone in the schedule information on the basis of the predicted load for each time zone and spatial information of the air conditioning target.

Here, the spatial information may be a size, a form, a purpose of use, a degree of outdoor air blocking, and a degree of air tightness of an air conditioning target. Here, the size of the air conditioning target may refer to a wideness or a volume, and the form of the air conditioning target may be a structural shape such as a rectangle or a circle. In addition, the purpose of use of the air conditioning target may be a working space, sports facilities, performance facilities, a classroom, a hotel, or the like. The degree of outdoor air blocking and the degree of air tightness may refer to an insulation state of a wall and an opened or closed state of a window or a door.

The environmental information collected based on these information may be reflected in a load. For example, the processor 140 may allocate a larger load value to a larger space and control the air conditioning apparatus 100 to operate in a cooling mode with a larger output intensity corresponding to the larger load value. That is, the processor 140 may control the air conditioning apparatus 100 while reflecting data on spatial information.

Meanwhile, when a difference between a load corresponding to a current time zone in the schedule information and a load corresponding to currently collected environmental information is a predetermined value or more, the processor 140 may control an operation of the driver 110 on the basis of the collected environmental information rather than the schedule information.

The processor 140 may modify the schedule information on the basis of environmental information collected for a predetermined period. To modify the schedule information, however, it is required that data having a great difference from existing data should not be data obtained through one-time measurement. This is because the collected data may exceptionally have a high or low measurement value only at a current time simply due to an exceptional situation. To modify the schedule information as previously stored in the memory 130, it is thus necessary to collect environmental information during a period long enough to be meaningful. That is, the schedule information may be modified only when it is determined that the ambient environment of the air conditioning apparatus 100 will continue to remain changed in the future.

Meanwhile, even in an exceptional situation, unless the schedule information is modified, a considerable amount of power may be wasted. For example, it is assumed that the air conditioning apparatus 100 is set to operate in a cooling (strong) mode from 9 o'clock to 6 o'clock. However, if the air conditioning apparatus 100 continues to operate according to the schedule information in an event where there are no persons around the air conditioning apparatus 100 after 12 o'clock p.m., energy will be wasted. This is because the air conditioning apparatus 100 may perform the predetermined operation even though there are no persons from 12 o'clock to 6 o'clock.

Unless this situation is repeated, the processor 140 may not modify the previously stored schedule information. It may not be preferable that the processor 140 modifies the schedule information while immediately reflecting a measurement in an exceptional situation in the environmental information. Accordingly, this embodiment provides a solution to the above-described problem without modifying the schedule information.

When a difference between a load corresponding to a current time zone in the schedule information and a load corresponding to currently collected environmental information is a predetermined value or more, the processor 140 may control an operation of the driver 110 on the basis of the collected environmental information rather than the schedule information.

Here, the processor 140 may control the driver 110 such that the air conditioning apparatus 100 operates in a new state in which the currently collected environmental information is reflected, rather than operating according to the contents included in the schedule information. For example, it is assumed that the air conditioning apparatus 100 is set to operate in a cooling (strong) mode from 9 o'clock to 6 o'clock. However, in an event where there are no persons around the air conditioning apparatus 100 after 12 o'clock p.m., even though the operation state included in the schedule information is indicated as a cooling (strong) mode, the processor 140 may cancel this and control the air conditioning apparatus 100 to be stopped.

Meanwhile, the processor 140 may control the air conditioning apparatus 100 on the basis of body temperatures of persons measured by the sensor 120. For example, it is assumed that the air conditioning apparatus currently operates in a cooling (weak) mode from 9 o'clock a.m. to 6 o'clock p.m. This is a case where the number of persons is normally small, and the schedule information applied is set such that the air conditioning apparatus 100 operates in a cooling (weak) state at all times. In this case, it is assumed that four persons whose body temperatures approach about 40 degrees in the hot weather enter indoors at about 10 o'clock a.m. In this case, an operation for quickly lowering an indoor temperature may be necessary, unlike a predicted load. The processor 140 may ascertain the number of persons as four and ascertain body temperatures of the persons as 40 degrees, and then calculate a load value in which such information is reflected. When a difference between the calculated load value and the already predicted load value is a predetermined value or more, the processor may cancel the schedule information as previously applied, i.e. the cooling (weak) mode, and control the air conditioning apparatus 100 to operate in a cooling (strong) mode.

Meanwhile, the processor 140 may ascertain a body temperature for each person, and control the air conditioning apparatus 100 to direct cooling toward a person whose body temperature is highest. The person whose body temperature is highest is mentioned in a general way, but it is not a requirement that only one person should be involved. While persons are classified into some groups based on their locations, the processor 140 may control the air conditioning apparatus 100 to direct wind toward a group to which high-temperature persons belong in a largest number.

Meanwhile, the processor 140 may include a random-access memory (RAM), a read-only memory (ROM), a central processing unit (CPU), a graphic processing unit (GPU), and a bus. The RAM, ROM, CPU and GPU may be connected to each other via the bus.

As described above, the air conditioning apparatus 100 according to an embodiment not part of the invention is controlled using schedule information classified in time units. Thus, a user does not need to control the air conditioning apparatus 100 every time and the convenience of the user can be improved.

In addition, the schedule information is modified on the basis of the collected environmental information and the modified schedule information is reflected in controlling the air conditioning apparatus 100. Therefore, this embodiment makes it possible to automatically control the air conditioning apparatus 100 without requiring a user to input an operation state of the air conditioning apparatus 100 in person to be suitable for a personal environment, thereby improving the convenience of the user.

Accordingly, the air conditioning apparatus 100 performs an operation of modifying schedule information when the environmental information is analyzed to be in a different pattern from the schedule information that is basically applied. Thus, the processor 140 may predict a future situation by comparing environmental information collected for a predetermined time with existing schedule information. In addition, if the predicted situation is different from the existing schedule information, the processor 140 may modify the existing schedule information, thereby making it possible to efficiently managing the air conditioning apparatus 100.

Meanwhile, the air conditioning apparatus 100 may cope with an exceptional situation without modifying the existing schedule information. The processor 140 may compare environmental information measured by the sensor with schedule information currently applied to the air conditioning apparatus 100. When an exceptional situation occurs in which there is a great difference between the two values of the compared information, the processor 140 may recognize the situation. Here, the driver 110 may be controlled to cancel the schedule information previously applied to the air conditioning apparatus 100 such that the air conditioning apparatus 100 operates in a state corresponding to the collected environmental information.

Therefore, the air conditioning apparatus 100 may quickly cope with an exceptional situation without modifying the existing schedule information, thereby efficiently managing power of the air conditioning apparatus 100. In addition, a user does not need to control the air conditioning apparatus 100 separately in an exceptional situation, thereby improving the convenience of the user.

In addition, the air conditioning apparatus 100 according to this embodiment may predict a future change in environmental information in advance and operate while reflecting the predicted change. For example, the air conditioning apparatus 100 may operate in advance, while predicting in advance that there will be an increase in the number of persons. The air conditioning apparatus 100 operating based on the predicted schedule information makes it possible to maintain a comfortable temperature at all times.

In addition, it is possible to predict in advance that there will be no persons in an air conditioning target, and thus the power supply to the air conditioning apparatus 100 may be cut off or the output intensity of the air conditioning apparatus 100 may be lowered in advance, thereby saving energy.

Meanwhile, with reference to FIG. 1, the air conditioning apparatus 100 has been described as internally modifying the schedule information. When implemented, however, an external server may convey a command regarding a control operation to the air conditioning apparatus 100 at each predetermined time, analyze environmental information, and modify schedule information.

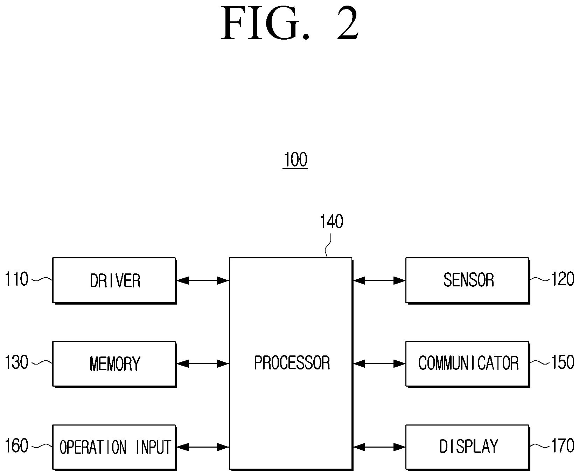

Meanwhile, only the simple components configuring the air conditioning apparatus 100 have been illustrated and described above. When implemented, however, the air conditioning apparatus 100 may additionally include various components. This will be described below with reference to FIG. 2.

FIG. 2 is a block diagram for explaining a specific configuration of the air conditioning apparatus 100 of FIG. 1.

Referring to FIG. 2, the air conditioning apparatus 100 may include the driver 110, the sensor 120, the memory 130, the processor 140, a communicator 150, an operation input 160, and a display 170.

The operations of the driver 110, the sensor 120, the memory 130, and the processor 140 have been described above with reference to FIG. 1. Thus, the overlapping descriptions thereof will be omitted.

The communicator 150 may convey environmental information collected by the sensor 120 to an external server or the like. Here, the external server may be a cloud server 300 or an automatic control server 400. The external server may perform an operation of newly generating or modifying schedule information based on information sent by the communicator 150 of the air conditioning apparatus 100. The external server may also convey the generated or modified schedule information to the air conditioning apparatus 100. Here, the communicator 150 of the air conditioning apparatus 100 may receive the generated or modified schedule information from the external server. The processor 140 may control the air conditioning apparatus 100 while reflecting the received schedule information.

The communicator 150 is configured to communicate with various types of external devices according to various types of communication methods. The communicator 150 includes a Wi-Fi chip, a Bluetooth chip, and a wireless communication chip. The processor 140 communicates with various external devices using the communicator 150.

The operation input 160 may receive one schedule information among a plurality of initial schedule information. To apply one of the plurality of initial schedule information previously stored in the memory 130 to the air conditioning apparatus 100, a user may select one schedule information through the operation input 160.

The operation input 160 may be a component receiving a user's control command. This may be in the form of a button installed in the air conditioning apparatus 100. In general, the operation input 160 of the air conditioning apparatus 100 may include a plurality of buttons, which may include a button for controlling a power supply, a button for selecting an operation mode, a button for selecting an output intensity in the operation mode, and the like. However, this is exemplary and buttons corresponding to other functions may further be added.

The operation input 160 may be implemented as a device such as a button, a touch pad, a mouse, or a keyboard, or may be implemented as a touch screen that is capable of performing the above-described function of the display 170 together with the operation input function.

The display 170 may also display collected environmental information, schedule information, and a current operation state of the air conditioning apparatus 100. In addition, the display 170 may display a user interface for selecting a plurality of schedule information.

However, it is not intended to limit the contents displayed on the display 170, but all related information that need to be conveyed to the user may be displayed.

The display 170 may display a user interface window for receiving a user control command. The display 170 may be implemented as a display in any of various types such as a liquid crystal display (LCD), an organic light emitting diode (OLED) display, a plasma display panel (PDP), and a touch screen.

Meanwhile, the display 170 may include a touch sensor for sensing a user's touch gesture. The touch sensor may be implemented as a sensor in any of various types such as an electrostatic type, a pressure sensitive type, and a piezoelectric type. The electrostatic type is a type in which a touch coordinate is calculated using a dielectric that is coated on a surface of the display to sense micro electricity excited by a user's body when a part of the user's body touches the surface of the display. The pressure sensitive type is a type in which a touch coordinate is calculated by sensing a current flow using two electrode plates embedded in the display such that when a user touches a screen, the upper and lower plates are brought into contact with each other at the touch point.

Meanwhile, it has been described above that one display 170 performs both a display function and a touch gesture sensing function. When implemented, however, the display function and the gesture sensing function may be performed by different components. That is, the display may be implemented by combining a display device only capable of displaying an image and a touch panel only capable of sensing a touch.

Meanwhile, it has been described so far with reference to FIGS. 1 and 2 that the processor 140 of the air conditioning apparatus 100 performs the operations of conveying a command regarding a control operation to the air conditioning apparatus 100, analyzing collected environmental information, and generating or modifying schedule information, at each predetermined time.

However, according to another embodiment not part of the invention, an external device or the like may convey a command regarding a control operation to the air conditioning apparatus 100, analyze environmental information, and generate or modify schedule information, at each predetermined time.

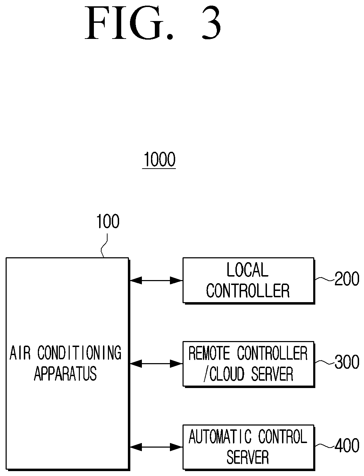

FIG. 3 is a block diagram for explaining a system 1000 controlling the air conditioning apparatus 100 according to an embodiment not part of the invention.

A local controller 200 may generally refer to a remote control controlling the air conditioning apparatus 100. For example, the remote control or the like is capable of short range control. The remote control may be an infrared (IR) remote control, a Bluetooth remote control, or the like. However, the remote control is not limited to the above-described kinds of remote controls, and various types of remote controls may be used in the control method according to this embodiment.

However, the local controller 200 may refer to a user terminal device capable of communicating with the air conditioning apparatus 100, rather than a remote control. The user terminal device may be a smart phone, a tablet, or the like. However, the user terminal device is not limited thereto, and may be a user terminal device capable of conveying a command regarding a control operation to the air conditioning apparatus 100, analyzing environmental information, and generating or modifying schedule information, at each predetermined time.

In addition, the remote controller may refer to a device capable of controlling the air conditioning apparatus 100 at a long distance rather than at a short distance. For example, the remote controller may be the cloud server 300 connected to the air conditioning apparatus 100. The cloud server 300 may perform the operations of conveying a command regarding a control operation to the air conditioning apparatus 100, analyzing environmental information, and generating or modifying schedule information, at each predetermined time, and may transmit the result thereof to the air conditioning apparatus 100.

For example, the air conditioning apparatus 100 may receive a control command from the cloud server 300 every hour and perform a corresponding operation.

In addition, the automatic control server 400 may communicate with the air conditioning apparatus 100. In the same manner as the cloud server 300, the external automatic control server 400 may perform the operations of conveying a command regarding a control operation to the air conditioning apparatus 100, analyzing environmental information, and generating or modifying schedule information, at each predetermined time, and may transmit the result thereof to the air conditioning apparatus 100.

Meanwhile, the components of the air conditioning apparatus 100 have been described in detail with reference to FIGS. 1 to 3 so far. The embodiments above have mentioned schedule information including information depending on time, which will be described below.

The schedule information may be a set of control commands in which collected environmental information and information on operation states corresponding to the environmental information are arranged to correspond to time. For example, in schedule information on a daily basis, commands set to perform specific operations at specific times from morning to evening may be stored. Therefore, when the schedule information is applied to the air conditioning apparatus 100, the processor 140 may automatically control the air conditioning apparatus 100 even though the user does not personally control the air conditioning apparatus 100.

Here, the schedule information may include environmental information stored for each hour and an operation state of the air conditioning apparatus 100 based on the environmental information.

Here, the environmental information may include at least one of an indoor temperature, an outdoor temperature, a humidity, the number of persons in an air conditioning target, temperatures of the persons, or an amount of dust. Here, the environmental information may be collected or measured by the sensor 120.

Here, the operation state may include information on operation modes and output intensities. The operation modes may refer to different modes such as cooling, heating, blowing and air cleaning functions, and the output intensities may refer to different outputs in the same operation mode, such as cooling (strong), cooling (medium), and cooling (weak).

Here, the operation state is not limited to the operation modes and the output intensities, and may additionally include information on functions and operations. In addition, the operation modes and the output intensities are not limited to the above-described elements, and may include additional functions.

Meanwhile, the operation state may correspond to collected environmental information. The processor 140 should analyze the collected environmental information and set an operation state corresponding thereto. Here, the collected environmental information is very diverse, and thus, the process of reflecting the diverse environmental information may be very complicated. Here, a machine learning method may be used as one way, which will be described later with reference to FIG. 11.

To determine an operation state corresponding to the collected environmental information, the air conditioning apparatus 100 according to an embodiment not part of the invention may use the concept of load.

The load may refer to a thermal load that has an influence on controlling a temperature. For example, it is assumed that a current temperature is 30 degrees, and a target temperature is 25 degrees, under the condition that the performance of the air conditioning apparatus 100 is constant. The air conditioning apparatus 100 needs to operate longer to reach the target temperature when a load is high than when the load is low. That is, it takes a long time to reach the target temperature if the load is high, and it takes a short time to reach the target temperature if the load is low.

Here, the air conditioning apparatus 100 may determine whether to increase an output according to a change in load. For example, if the target temperature of the air conditioning target is 25 degrees at all times, the output is also set to be high at a high-load time, thereby maintaining the target temperature.

Thus, the load may refer to various information that having an influence on the time for reaching the target temperature. In the embodiments not part of the invention, however, the load is used to refer to one representative value in which various environmental information are combined, rather than each information. Specifically, the load may be a value calculated by reflecting at least one of an indoor temperature, an outdoor temperature, a humidity, the number of persons in an air conditioning target, body temperatures of the persons, or an amount of dust.

Here, when different types of environmental information are combined, one load value may be calculated through a conversion process corresponding to each information.

For example, if the number of persons is 30 and a current temperature is 27 degrees, +30 may be assigned for the number of persons and +5 may be assigned for the current temperature of 27 degrees. Here, the load may be 35. Each of the assigned numerical values may be changed according to user's settings.

The operation state for each time zone in the schedule information may be modified on the basis of the predicted load for each time zone. As in the above-described example, it is assumed that the current number of persons is 30 and the current temperature is 27 degrees. Here, the predicted load is 35 and an operation state may be determined to correspond to the load value of 35. The operation state may be set to a cooling (strong) mode, and the operation state corresponding to the load value of 35 may be changed according to user's settings.

Meanwhile, according to an embodiment not part of the invention, a load may be predicted and determined by combining a plurality of environmental information, not based only on information at a current time. For example, when it is assumed that a load at 9 o'clock today is 35 and a load at 9 o'clock tomorrow is 30, a load the day after tomorrow may be predicted to be 32.5, which is an average value of 35 and 30. Here, only the average value is exemplified, but a predicted load value may be determined through various mathematical methods.

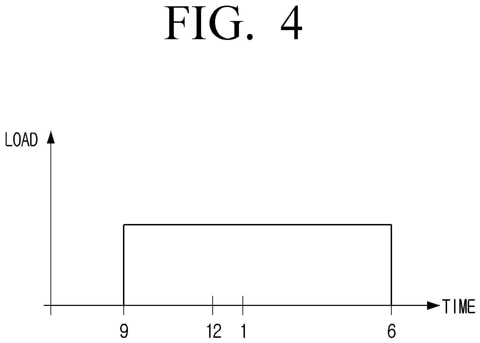

A load obtained in this manner may have a different value depending on time, which will be described in detail below with reference to FIGS. 4 to 7.

FIGS. 4 to 7 are diagrams for explaining an amount of change in load depending on time according to an embodiment not part of the invention.

FIG. 4 is a diagram for explaining an amount of change in load relative to time according to an embodiment not part of the invention.

Referring to FIG. 4, the load has a constant value from 9 o'clock to 6 o'clock, and the load at the other times is 0. Here, the load is kept constant, not adjusting a range of fluctuation in the load over time. Therefore, the schedule information reflecting this may enable the air conditioning apparatus 100 to be set to operate with a constant output from 9 o'clock to 6 o'clock.

Here, FIG. 4 may be relevant to a pattern of load, and the pattern of load may show a change in load over time.

Here, the schedule information reflecting FIG. 4 may be set as basic schedule information. When the air conditioning apparatus 100 is first installed, the schedule information should be set as the simplest one because there is no data stored. Therefore, the schedule information reflecting FIG. 4 may be set as basic schedule information. Here, an operation start time and an operation end time of the air conditioning apparatus 100 at which the load is changed, i.e. 9 o'clock and 6 o'clock, may be changed.

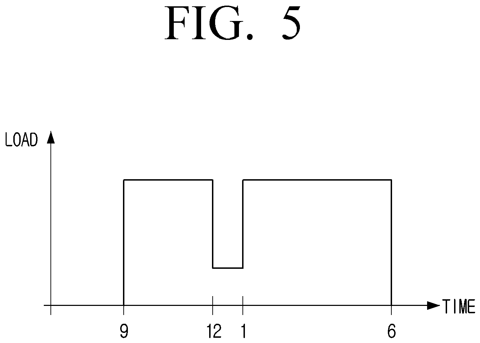

FIG. 5 is a diagram for explaining an amount of change in load according to another embodiment not part of the invention.

Referring to FIG. 5, there is no load before 9 o'clock and the load increases sharply after 9 o'clock. This reflects a schedule for a space such as an office or a school, at which persons arrive at around 9 o'clock. Here, most persons are out of the air conditioning target from 12 o'clock to 1 o'clock, which is a lunch time, and the load decreases. The reason why the load between 12 o'clock and 1 o'clock is not zero (0) is to reflect a possibility that there may be a person who guards the office or a person who does not have lunch. In addition, as the number of persons increases again after 1 o'clock, the load increases again from 1 o'clock. After 6 o'clock, which is a quitting time, the load decreases back to zero.

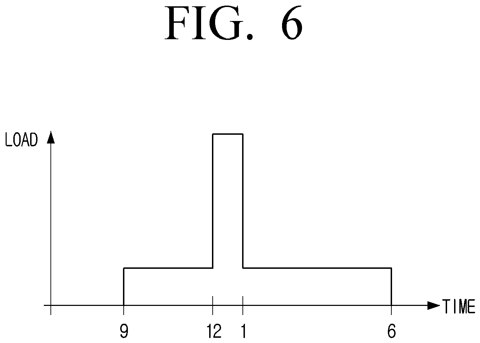

FIG. 6 is a diagram for explaining an amount of change in load according to another embodiment not part of the invention.

Referring to FIG. 6, it corresponds to a situation opposite to that of FIG. 5. For example, it may correspond to a space having a high load between 12 o'clock and 1 o'clock and a low load at the other times. It may correspond to a case such as a restaurant where a load is high only during a lunch time. Here, it may correspond to a situation from 12 o'clock to 1 o'clock where the persons go out as in FIG. 5 and move to the space corresponding to FIG. 6. Referring to FIG. 6, a load at a time other than 12 o'clock to 1 o'clock is not indicated as zero (0) because there are workers working in the restaurant.

Meanwhile, although it is not illustrated with regard to FIG. 6, there may be a space crowded with people only between 12 o'clock and 1 o'clock but having no one who works fixedly there. For example, it may correspond to a rest room. The rest room is crowded with people only between 12 o'clock and 1 o'clock and the people do not come there at the other times. Thus, the load at a time other than 12 o'clock to 1 o'clock may be zero (0).

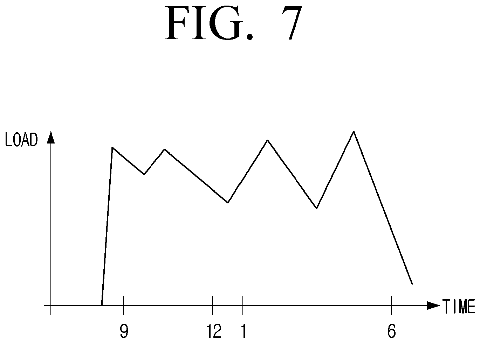

FIGS. 4 to 6 illustrate graphs in which the amount of load is changed instantaneously. In these cases, the load may be measured on an hourly basis. Actually, there may be a change in the persons on a shorter-time cycle, which will be described below with reference to FIG. 7.

FIG. 7 is a diagram for explaining an amount of change in load according to another embodiment not part of the invention.

Referring to FIG. 7, it is illustrated that a measurement cycle is shortened to check that the load increases at a certain speed. In FIGS. 4 to 6, the load is measured on an hourly basis. If the measurement duration is shortened, however, a slope concerning the amount of change in load can be seen as in FIG. 7.

Also, as illustrated in FIG. 7, there may be no regularity depending on time. In FIGS. 4 to 6, a certain pattern is shown from 9 o'clock a.m. to 6 o'clock p.m., but in FIG. 7, increases and decreases are repeated without having a certain pattern.

If an amount of change in load is detected in the pattern as in FIG. 7, it may not be easy for the processor 140 to predict a load. Thus, the processor 140 may apply general schedule information as in FIG. 4. Here, the air conditioning apparatus 100 may be controlled according to an average value of loads that are changed at a certain time.

FIGS. 4 to 7 described above illustrate a change in load value depending on time, the load value being converted from environmental information varying depending on time (e.g., a temperature or the number of persons).

The change in load value may be calculated through the environmental information collected by the sensor 120.

Meanwhile, the environmental information may include spatial information, temporal information, and person information.

The spatial information may be a size, a form, a purpose of use, a degree of outdoor air blocking, and a degree of air tightness of an air conditioning target. Here, the size of the air conditioning target may refer to a wideness or a volume, and the form of the air conditioning target may be a structural shape such as a rectangle or a circle. In addition, the purpose of use of the air conditioning target may be a working space, sports facilities, performance facilities, a classroom, a hotel, or the like. The degree of outdoor air blocking and the degree of air tightness may refer to an insulation state of a wall and an openable and closable state of a window or a door.

For example, it is assumed that space A has a wideness of 100 and space B has a wideness of 200, under the same conditions that the air conditioning object is in a square structure and the number of persons is five. When a current temperature is 30 degrees, a target temperature is set to 25 degrees, and the same air conditioning apparatus 100 is used for a cooling function with the same output, space B may be predicted to take a longer time to reach the target temperature.

Accordingly, the data on wideness may be converted into a load value. Specifically, an increase in wideness causes an increase in load, but they are not considered necessarily proportional. Therefore, actual changes in load depending on the above-described spatial information, such as the form, the wideness, and the purpose of use of the space, may be checked through experiments. Using the correlations ascertained through the experiments, the air conditioning apparatus 100 may convert the measured values of the spatial information into load values. In addition, the above-described correlations may be ascertained on the basis of collected environmental information.

Here, the air conditioning apparatus 100 may ascertain a time for reaching the target temperature by using the converted load values.

The temporal information may be an operation start time and an operation end time of the air conditioning apparatus 100, an efficient operation-required period for saving energy, and a time when an indoor temperature rapidly rises (or falls). In addition, it may depend on seasons whether to operate the air conditioning apparatus 100. Thus, the temporal information may include information on seasons.

For example, from June to August, it may take a longer time to reach a target temperature even in the same space due to a great amount of heat from the outside. Therefore, a load may be added to the temporal information for the period from June to August. Specifically, the air conditioning apparatus 100 may perform an operation of adding +20 to a load value for the period from June to August.

The person information may include the number of persons, temperatures of the persons, a density of the persons, an activity of the persons, a clothing amount, an age, a race (or a nationality or a country), and user-specified setting records.

The persons may refer to people who are present in an air conditioning target, and the density of the persons may refer to the number of persons relative to a wideness of the air conditioning target. The ascertainment of the activity of the persons may refer to ascertaining if the persons in the air conditioning target are stationary or moving. If the persons are moving for a certain time, the air conditioning apparatus 100 may ascertain that they are exercising. Here, it may be predicted in advance that the persons will feel hot soon, and the processor 140 may increase an output of the air conditioning apparatus 100 in advance.

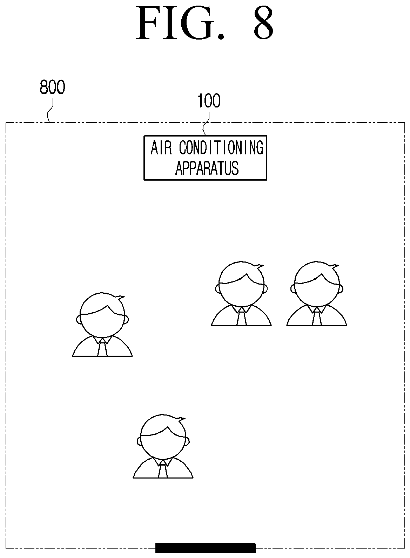

FIGS. 8 to 10 are diagrams for explaining an operation of collecting environmental information according to an embodiment not part of the invention.

FIG. 8 is a diagram for explaining a state where there are persons in an air conditioning target 800 where the air conditioning apparatus 100 operates.

Referring to FIG. 8, the air conditioning apparatus 100 may determine the number of persons in the air conditioning target 800 using the sensor 120. In FIG. 8, the persons are expressed as being irregularly located, but the sensor 120 may ascertain the number of persons even if the persons are present in a regular form. For example, the number of persons may be ascertained even in a space where a density of persons is very high.

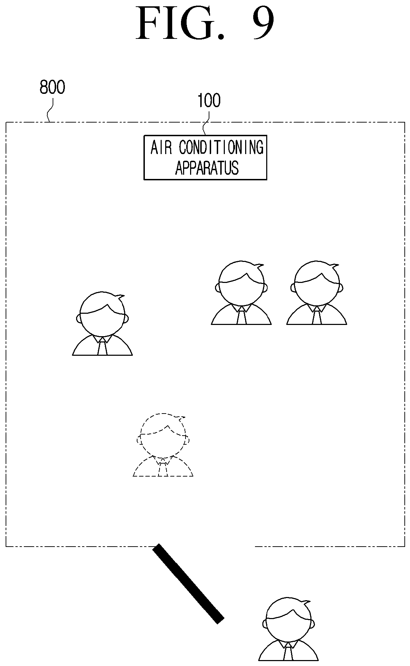

FIG. 9 is a diagram for explaining a movement of a person according to another embodiment not part of the invention.

Referring to FIG. 9, it is intended that one person goes out of the space of the air conditioning target 800. In this case, the air conditioning apparatus 100 may determine a change in the number of persons in the space of the air conditioning target 800 using the sensor 120. Specifically, the sensor 120 may detect a movement of the person, and thus ascertain a change in the number of persons in the space of the air conditioning target 800.

Here, the air conditioning apparatus 100 may ascertain the change in the number of persons by checking the number of persons who are currently present in the air conditioning target 800 at each predetermined time instead of detecting the movement of the person.

Meanwhile, the load reflects environmental information varying depending on time, but may reflect environmental information that does not vary depending on time. For example, it may be spatial information. Normally, once the air conditioning apparatus 100 is installed, its location is rarely changed, and thus, the air conditioning target 800 is not changed depending on time. That is, the air conditioning target 800 of the air conditioning apparatus 100 once installed, i.e. an office or a classroom, has a constant area, a load reflecting this may be constant.

FIGS. 8 to 9 illustrate a form 800 in which the air conditioning target 800 have right-angled corner portions, but the sensor 120 may also detect a form of an air conditioning target having curved corners.

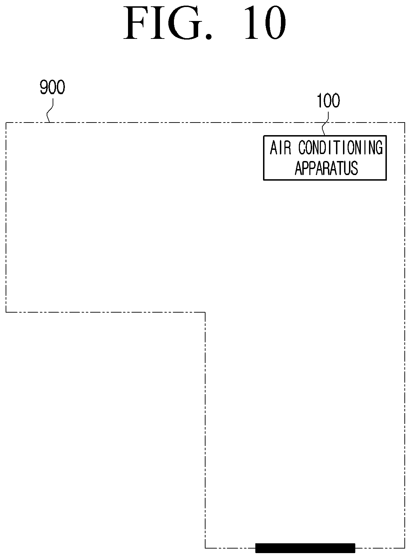

FIG. 10 is a diagram for explaining an air conditioning target according to another embodiment not part of the invention.

Referring to FIG. 10, the sensor 120 of the air conditioning apparatus 100 may detect a form of an air conditioning target. Referring to FIG. 10, even when the air conditioning target is not in a general rectangle structure, a specific form may be detected using the sensor 120. The sensor 120 may detect a space having an unusual form 900 as illustrated in FIG. 10.

FIG. 11 is a diagram for explaining a learning model according to an embodiment not part of the invention.

Referring to FIG. 11, in this embodiment, load information may be calculated by a machine learning-based recognition system. In this embodiment, a deep learning-based recognition system is described as an example of a classification system using a series of machine learning algorithms based on neural networks.

Specifically, the deep learning-based recognition system may include at least one classifier. The classifier may correspond to one or a plurality of processors 140. The processor 140 may be implemented as an array of multiple logic gates, or implemented as a combination of a general-purpose microprocessor 140 and a memory 130 storing a program that may be executed in the microprocessor 140. The classifier may be implemented as a neural network-based classifier, a support vector machine (SVM), an adaboost classifier, a Bayesian classifier, a perceptron classifier, and the like. An embodiment not part of the invention in which the classifier is implemented as a convolutional neural network (CNN)-based classifier will be described below. The neural network-based classifier, which is an arithmetic operation model implemented to emulate a calculation ability of a biological system by using numerous artificial neurons connected by connection lines, performs a cognitive function or a learning process of a human through the connection lines having connection intensities (weights). However, the classifier of this embodiment a is not limited thereto, and may be implemented as any of the various classifiers described above.

A general neural network includes an input layer 1110, a hidden layer 1120, and an output layer 1130. The hidden layer 1120 may include one or more layers depending on the need. As an algorithm for training the neural network, a back propagation algorithm may be used.

The classifier may train the neural network such that if certain data is input to the input layer 1110 of the neural network, output data with respect to the input learning data is output to the output layer 1130 of the neural network. If feature information extracted from a captured image is input, the classifier may classify patterns of the feature information into any one of the various classes by using the neural network and output the result of classification.

Here, the input layer 1110 may be a data value measured by the sensor 120. For example, nodes 1111, 1112 and 1113 of the input layer 1110 may be a temperature, a humidity, the number of persons, body temperatures of the persons, behaviors of the persons, a size of a space, a structure of the space, or the like. The example of the input layer 1110 described above is only for illustrative purposes, and is not limited thereto. That is, the number of nodes of the input layer 1110 may be changed according to user's settings.

Referring to FIG. 11, the nodes 1111, 1112 and 1113 of the input layer 1110 are illustrated in three types, but this may be changed.

Data received through the sensor 120 may correspond to the input layer 1110. Here, the output layer 1130 may be an output intensity of the driver 110 or an operating mode of the driver 110.

Specifically, the processor 140 may determine an operation mode or an output intensity of the driver 110, which are included in the schedule information, through various data received from the sensor 120. Here, the processor 140 may learn based on whether or not power consumption according to the operation mode or the output intensity of the driver 110 is appropriate. In the learning process, a time for reaching a target temperature may also be considered. The processor 140 may learn while considering the time for reaching the target temperature with the operation mode or the output intensity of the driver 110 obtained as an output value.

Meanwhile, the output layer 1130 may be set as a load in that the operation mode or the output intensity may vary depending on a size of the load.

Meanwhile, the processor 140 needs to calculate an output value for ultimately controlling the driver 110 on the basis of the data received from the sensor 120. Thus, the processor 140 may use a deep learning-based recognition system as a classification system using a series of machine learning algorithms based on neural networks.

In addition, although the hidden layer 1120 is expressed to include two stages in FIG. 11, the classification system may include only one-stage hidden layer. In addition, the number of nodes included in the hidden layer 1120 may also be changed.

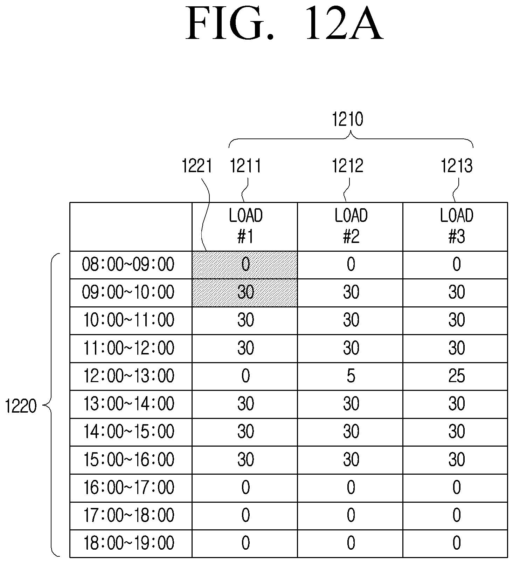

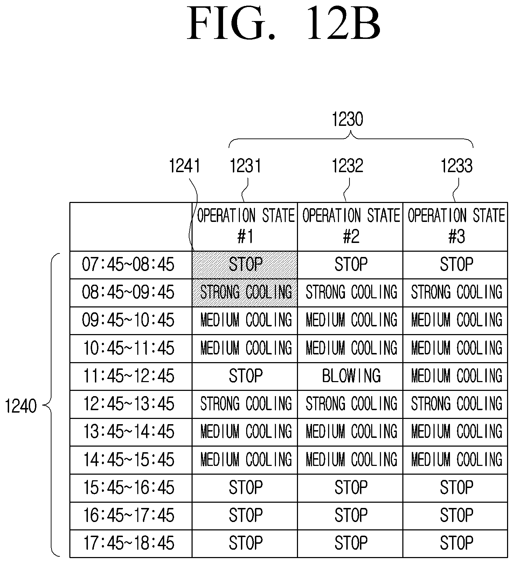

FIGS. 12 to 17 are diagrams for explaining schedule information.

FIG. 12A is a diagram for explaining a change in load depending on time.

Referring to FIG. 12A, a plurality of loads 1210 are classified into, load #1 1211, load #2 1212, and load #3 1213 on a daily basis.

Times are classified on an hourly basis, and a load varies depending on the classified time 1220. For example, loads from 9 o'clock to 12 o'clock among load #1 1211 are 30. Load #1 1211, load #2 1212, and load #3 1213 refer to load information on a daily basis. A load value is stored for each hour on a daily basis.

FIG. 12B is a diagram for explaining an operation state of the air conditioning apparatus 100 corresponding to the load.

Referring to FIG. 12B, operation state #1 1231, operation state #2 1232, and operation state #3 1233 refer to operation state information on a daily basis. An operation state value is stored for each hour 1240 on a daily basis.

Here, unlike the times illustrated in FIG. 12A, the times illustrated in FIG. 12B are set on an hourly basis starting from 45 minutes. The operation state refers to an operation function of the air conditioning apparatus 100, and the load may have an influence on determining an operation state. The processor 140 makes it possible to maintain an appropriate target temperature by enabling the air conditioning apparatus 100 to operate in advance with respect to the load depending on time. Thus, the operation state may be applied 15 minutes earlier than the time for which the load value is measured.

Here, 15 minutes is one value for explanation and may be changed according to user's settings. In addition, the processor 140 may automatically calculate and apply an optimal operation time for efficient power management even in the absence of the user's manual settings.

Here, the operation state may include information on operation modes and output intensities. The operation modes may refer to different modes such as cooling, heating, blowing and air cleaning functions, and the output intensities may refer to different outputs in the same operation mode, such as cooling (strong), cooling (medium), and cooling (weak). Here, the operation state is not limited to the operation modes and the output intensities, and may additionally include information on functions and operations.

Meanwhile, although the times 1220 described in FIG. 12A and the times 1240 described in FIG. 12B are set at one-hour intervals, but this is merely an example and an time interval may be set on a 15-minute basis. Rather, the time interval may be set small to express both load information and operation state information.

FIG. 12C is a diagram for explaining one schedule information including both load information and operation state information.

The schedule information may include environmental information and an operation state, and a load may be calculated on the basis of the environmental information. That is, the schedule information may include both the load and the operation state.

Referring to FIG. 12C, it illustrates partial schedule information #1 1250 including both loads 1221 (in FIG. 12a) from 8 o'clock to 10 o'clock among load #1 1211 and operation states 1241 (in FIG. 12b) from 7:45 to 9:45 among operation state #1 1231 (in FIG. 12b). Referring to FIG. 12C, it may be seen that load #1 1211 and operation state# 1 1231 are stored at the times 1260 that are classified on a 15-minute basis.

Specifically, the load is zero (0) before 9 o'clock and is 30 from 9 o'clock. The air conditioning apparatus 100 needs to operate in advance in an air conditioning target having a load of 30 from 9 o'clock. This is because a user may already feel hot if the air conditioning apparatus 100 starts to operate from 9 o'clock, at which the load becomes 30.

Accordingly, the operation state of the air conditioning apparatus 100 may be changed to a cooling (strong) mode 15 minutes earlier than the point-in-time when the load becomes 30. In addition, if it is determined that an indoor temperature has already decreased sufficiently at 09:45, and there is no change in the load after 15 minutes, the operation state may be changed to a cooling (medium) mode.

Since the air conditioning apparatus 100 does not operate before 9 o'clock, an operating mode may be set to a cooling mode and an output intensity may be set to a strong intensity to reach a target temperature. To maintain the target temperature after a certain time, however, the output intensity may be set to a medium intensity.

This is only to show an exemplary change in operation state and the operation state may be changed in a different way.

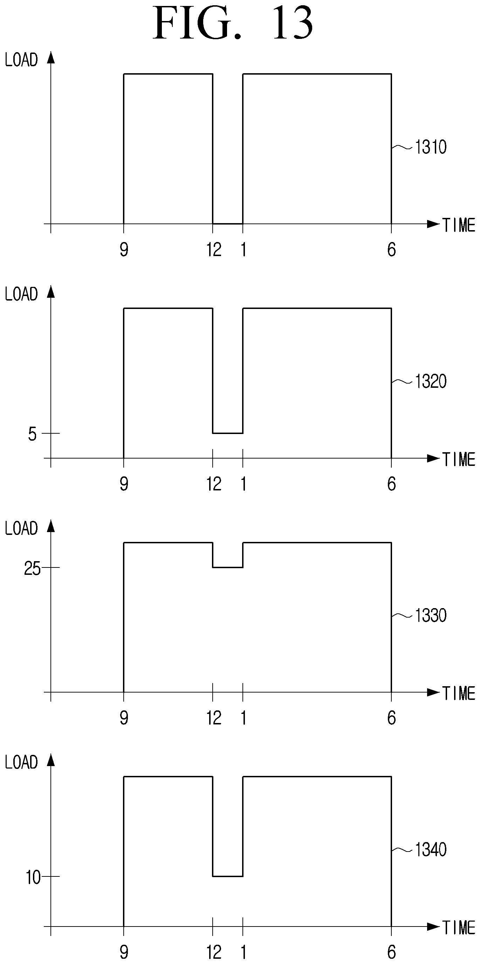

FIG. 13 is a diagram for explaining that a next load is predicted by combining individual load #1 1211, load #2 1212, and load #3 1213 illustrated in FIG. 12A.

Referring to FIG. 13, load #1 1211, load #2 1212, and load #3 1213 have different load values from 12 o'clock to 1 o'clock, while having the same load value in the other time zones. Here, 1310 is a graph for load #1 1211, and 1320 is a graph for load #2 1212. Further, 1330 is a graph for load #3 1213.

In addition, 1340 is a graph in which load #1 1211, load #2 1212, and load #3 1213 are all combined to predict a next load value. In 1340, the next load value is predicted as an average value of load #1 1211, load #2 1212, and load #3 1213. For example, a load value between 12 o'clock and 1 o'clock is 0 for load #1 1211, 5 for load #2 1212, and 25 for load #3 1213. Here, the predicted load value may be produced through a calculation process of 10= (0+5+25) /3.

However, this is merely one method, and a reasonable load value may be predicted through another mathematical method. The predicted load value may then be used to newly generate or modify schedule information.

FIG. 14 is a table illustrating only load values among schedule information.

Referring to FIG. 14, a load value may only reflect the number of persons. The sensor 120 may measure the number of persons depending on time. After ascertained, the measured number of persons may be converted into a corresponding load value and stored for each hour.

Referring to FIG. 14, loads are shown to be changed on an hourly basis in a weekly cycle. In addition, times are classified on an hourly basis, and load information may be seen based on the classified times 1420 for each day of the week, i.e. Monday 1411, Tuesday 1412, Wednesday 1413, Thursday 1414, Friday 1415, Saturday 1416 and Sunday 1417.

Basically, there is a certain load from Monday 1411 to Friday 1415, but there is no load on Saturday 1416 and Sunday 1417. Here, the air conditioning target may be a classroom or an office where there are no person on the weekend.

In addition, loads are zero (0) before 9 o'clock a.m. and after 6 o'clock p.m. Here, the air conditioning apparatus 100 may be controlled not to operate. Most loads from 9 o'clock a.m. to 12 o'clock p.m. are indicated as 30. This may mean that a load value concerning the number of persons is 30.

Here, load values from 9 o'clock a.m. to 12 o'clock p.m. for Thursday may be set to 29 (1430), which means that one person is unusually absent in the air conditioning target. For example, when a person is not present in the air conditioning target at a specific time because he/she is on a business trip or is late, this may be ascertained through the sensor 120.

In addition, from 12 o'clock to 13 o'clock, which is a lunch time, a load is expressed as 5 indicating that most of the persons are out of the air conditioning target and only some of the persons remain there (1440). Thus, the load from 12 o'clock to 13 o'clock may be set to 5. After 13 o'clock, the persons returns to the air conditioning target and a load value may be set back to 30.

Meanwhile, loads from 14 o'clock to 15 o'clock for Tuesday and Thursday are indicated as 1 (1450). This is based on the assumption that most persons are not present in the air conditioning target because they are in a physical education class on a specific day of the week. Here, a situation is reflected where only one person remains there, and a load may actually be zero (0) or more than 1. In general, a physical education for a class is carried out at a fixed time on a weekly basis. Thus, load values from 14 o'clock to 15 o'clock for next Tuesday and Thursday may be similar.

Accordingly, the processor 140 may issue a control command corresponding to the schedule information. For example, an output of the air conditioning apparatus 100 may be lowered before 14 o'clock on Tuesdays and Thursdays to avoid wasting unnecessary power.

Further, loads may be 10 from 16 o'clock to 18 o'clock on Monday and Wednesday (1460), but may be zero (0) on Tuesday, Thursday and Friday. It is reflected that a class ends at 16 o'clock regularly and there is no person in the air conditioning target thereafter, but on Monday and Wednesday a few people remain in the space for other activities from 16 o'clock to 18 o'clock.

Load values may be stored while reflecting information on the air conditioning target of the air conditioning apparatus 100. The stored load values may be reflected in schedule information through the processor 140.

For example, the schedule information reflecting the contents of FIG. 14 will be described.

In case of Monday, the schedule information may include a control command for operating the air conditioning apparatus 100 from 8:45 a.m., with the prediction that the load rapidly increases to 30 at 9 o'clock a.m. The schedule information may also include a command for stopping the operation of the air conditioning apparatus 100 from 11:45, with the prediction that the load decreases to 5 at 12 o'clock.

The schedule information may include a control command for operating the air conditioning apparatus 100 at 12:45 in advance, with the prediction that the load rapidly increases back to 30 from 13 o'clock. The schedule information may include a control command for changing the operation mode of the air conditioning apparatus 100 to a low-output mode from 15:45, with the prediction that the load decreases back to 10 at 16 o'clock. Thereafter, the control unit may include a control command to stop the operation mode of the air conditioning apparatus 100 from 17:45, with the prediction that the load becomes zero (0) after 18 o'clock.

In the above-described method, the time at which the load is changed is expressed as each hour on the hour such as 9, 12, 16, or 18 o'clock, and it is assumed that the air conditioning apparatus 100 performs an operation corresponding to a control command 15 minutes before each hour on the hour. However, the load may be changed at a certain time interval, not every hour on the hour, depending on a time when the load is measured. For example, when loads are measured on a 30-minute basis, the loads at 8:30, 9 o'clock, and 9:30 may be stored, and the schedule information may include a control command corresponding to the 30-minute interval.

In addition, it is described above that the operation of the air conditioning apparatus 100 is controlled 15 minutes before the time when the load is changed, but this time may be changed.

In addition, the processor 140 may calculate a control command for reaching a target temperature using minimum power for efficient power management without maximizing the performance of the air conditioning apparatus 100. For example, in case of 9 o'clock for Monday in FIG. 14, there may be various ways to reach 25 degrees as a target temperature, with a load changed to 30 at 9 o'clock. In a first method, the target temperature may be reached in 5 minutes with a strong output intensity of cooling. In a second method, the target temperature may be reached in 15 minutes with a weak output intensity of cooling. Here, a time for reaching the target temperature may be calculated using a current temperature and a current load. In addition, the processor 140 may perform such control as to compare power consumptions for operation in the first method and in the second method to select a more efficient method.

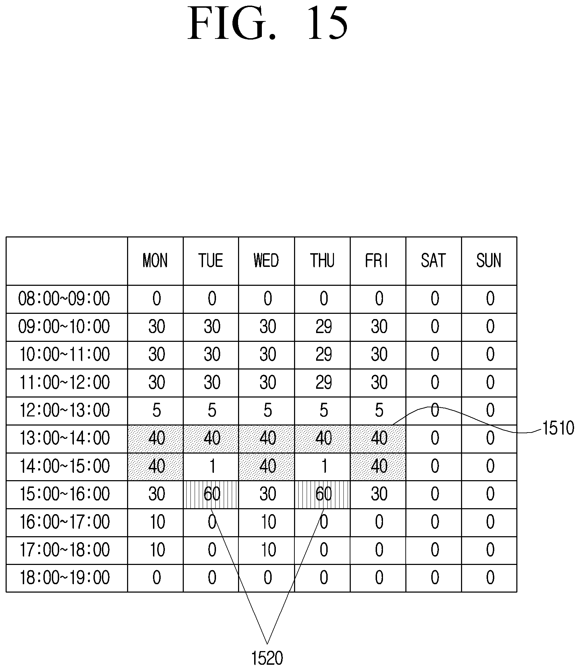

FIG. 14 illustrates an embodiment not part of the invention in which the number of persons is only reflected in the load, but it is possible to reflect load information depending on time and a special situation, as well as the number of persons, in the load. Such an embodiment will be described below with reference to FIG. 15.

FIG. 15 is a diagram illustrating load information on a weekly basis according to another embodiment not part of the invention.

Referring to FIG. 15, loads may increase by about +10 at 13 o'clock to 15 o'clock on Monday to Friday. From 13 o'clock p.m. to 15 o'clock p.m., a large amount of heat is introduced from the outside, so it takes a longer time to lower a temperature than in the other time zones. To reflect this point, a load value may thus be additionally reflected from 13 o'clock to 15 o'clock and the load is expressed as 40 (1510). Here, there are few people from 14 o'clock to 15 o'clock on Tuesdays and Thursdays, which may not be reflected as corresponding to a time zone in which an amount of heat from the outside is large.

Meanwhile, loads at 15 o'clock on Tuesdays and Thursdays are different by twice when compared to those at 15 o'clock on the other days of the week. This is based on the assumption that persons get back after physical activities from 14 o'clock to 15 o'clock on Tuesday and Thursday. When the persons get back after the physical activities, persons' body temperatures may be high and the persons may feel very hot. The load reflecting this situation is expressed as 60 (1520).

This change is repeated on a weekly basis. Thus, it may be checked if an indoor temperature has repeatedly increased at a specific time using the stored data. If the rising pattern has been repeatedly shown by a predetermined number of times or more, a load may be raised and the raised load may be stored as in FIG. 15. After the load is changed, the schedule information may be generated or modified while reflecting the change.

Meanwhile, the schedule information may correspond to a combination of control commands for the air conditioning apparatus 100 to analyze data stored for a certain period and perform corresponding operations depending on time. Here, the schedule information is changed according to a change in the stored load, but it is general that the schedule information once applied basically remain unchanged.

However, an embodiment not part of the invention may include an operation of changing the applied schedule information.

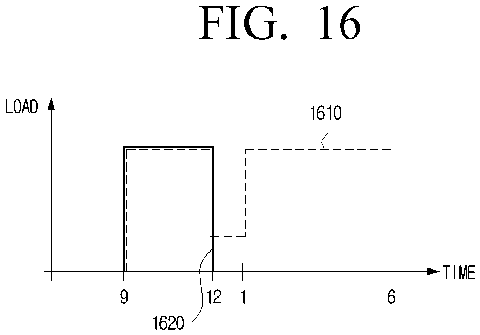

FIG. 16 is a diagram for comparing a load 1610 corresponding to the applied schedule information and a currently measured load 1620.

Referring to FIG. 16, loads from 9 o'clock a.m. to 12 o'clock p.m. are measured to be the same as those currently applied. However, loads after 12 o'clock p.m. are indicated as zero (0). If the air conditioning apparatus 100 continues to operate to correspond to the applied schedule information in spite of the change in load, power will be wasted much. Of course, this is solved if a user turns off the power when leaving, but an object of the invention is to automatically control the air conditioning apparatus 100. Thus, the invention provides a solution thereto.

The processor 140 calculates a difference value between the load 1610 to which the schedule information is applied and the measured load 1620. Hence, the processor 140 determines whether or not the difference value corresponds to a predetermined condition. When the difference value is greater than a certain value, the processor 140 applies schedule information reflecting a new control command instead of the existing schedule information.

For example, the load values 1620 measured after 12 o'clock are maintained as zero (0) in FIG. 16. The previous loads 1610 are also low from o'clock 12 to 1 o'clock, and the processor 140 may not apply new schedule information. However, after 1 o'clock, the difference from the previously loads 1610 is great, which corresponds to the predetermined condition, and the processor 140 may not apply the existing schedule information. Here, an output intensity of the driver 110 may be regulated without applying the existing schedule information.

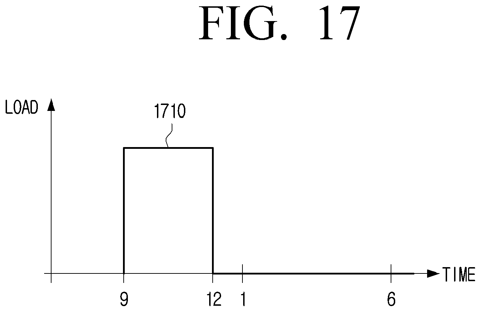

FIG. 17 is a diagram for explaining modification or generation of schedule information.

In addition, if the situation described with reference to FIG. 16 is repeated by the predetermined number of times or more, the situation is not considered exceptional and it may be determined that the existing pattern has been changed. Accordingly, a new load pattern 1710 may be generated as illustrated in FIG. 17. Here, the existing schedule information may be modified or a new schedule information may be generated.

In addition, it is also possible to apply newly generated schedule information rather than applying schedule information currently applied to the air conditioning apparatus 100.

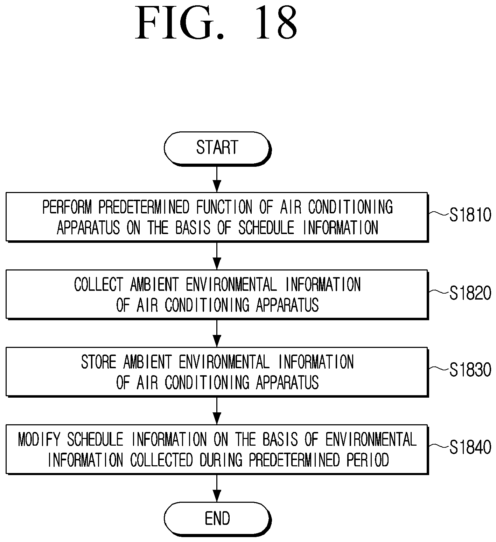

FIG. 18 is a flowchart for explaining a control method of the air conditioning apparatus 100 according to an embodiment not part of the invention.

Referring to FIG. 18, in the control method of the air conditioning apparatus 100, a predetermined function of the air conditioning apparatus 100 may be performed on the basis of schedule information (S1810). Here, the control method may further include previously storing a plurality of schedule information for each day of the week in the air conditioning apparatus 100. In the performing, the predetermined function of the air conditioning apparatus 100 may be performed on the basis of schedule information corresponding to a current day of the week among the plurality of schedule information. Further, the predetermined function of the air conditioning apparatus 100 may be performed on the basis of initial schedule information selected by a user among a plurality of initial schedule information as previously stored. In addition, when a difference between a load for a current time zone in the schedule information and a load corresponding to currently collected environmental information is a predetermined value or more, the predetermined function may be performed on the basis of the collected environmental information rather than the schedule information.

Here, ambient environmental information of the air conditioning apparatus 100 may be collected (S1820), and the collected ambient environmental information may be stored (S1830). Here, the environmental information may include at least one of an indoor temperature, an outdoor temperature, a humidity, the number of persons in an air conditioning target, or an amount of dust.

Here, the schedule information may be modified based on environmental information collected during a predetermined period (S1840). In the modifying, the schedule information may be modified by classifying the collected environmental information as stored for each time zone and comparing the classified environmental information for each time zone with an operation state for each time zone in the schedule information. In addition, a load for each time zone may be predicted on the basis of the classified environmental information for each time zone, and the operation state for each time zone in the schedule information may be modified on the basis of the predicted load for each time zone. Further, the operation state for each time zone may be predicted from the classified environmental information for each time zone using a predetermined learning model, and the operation state for each time zone in the schedule information may be modified by determining an operation mode of the air conditioning apparatus 100 and an output intensity in the operation mode for the time zone on the basis of the predicted load for the each time zone. In addition, the operation state for each time zone in the schedule information may be modified on the basis of the predicted load for each time zone and spatial information of an air conditioning target.

As described above, the air conditioning apparatus 100 according to the embodiment not part of the invention is controlled using the schedule information classified in time units. Thus, the user does not need to control the air conditioning apparatus 100 every time and the convenience of the user can be improved.

In addition, the schedule information is modified on the basis of the collected environmental information and the modified schedule information is reflected in controlling the air conditioning apparatus 100. Therefore, it is possible to automatically control the air conditioning apparatus 100 without requiring the user to control an operation state of the air conditioning apparatus 100 to be suitable for an personal environment, thereby improving the convenience of the user.

Here, the air conditioning apparatus 100 performs an operation of modifying schedule information when the environmental information is analyzed to be in a different pattern from the schedule information that is basically applied. Thus, the processor 140 may predict a future situation by comparing environmental information collected for a predetermined time with existing schedule information. In addition, if the predicted situation is different from the existing schedule information, the processor 140 may modify the existing schedule information, thereby making it possible to efficiently manage the air conditioning apparatus 100.

Meanwhile, the air conditioning apparatus 100 may cope with an exceptional situation without modifying the existing schedule information. The processor 140 may compare environmental information measured by the sensor with schedule information currently applied to the air conditioning apparatus 100. When an exceptional situation occurs in which there is a great difference between the two values of the compared information, the processor 140 may recognize the situation. Here, the driver 110 may be controlled to cancel the schedule information previously applied to the air conditioning apparatus 100 such that the air conditioning apparatus 100 operates in a state corresponding to the collected environmental information.

Therefore, the air conditioning apparatus 100 may quickly cope with an exceptional situation without modifying the existing schedule information, thereby efficiently managing power of the air conditioning apparatus 100. In addition, the user does not need to control the air conditioning apparatus 100 separately in an exceptional situation, thereby improving the convenience of the user.

In addition, the air conditioning apparatus 100 according to an embodiment not part of the invention may predict a future change in environmental information in advance and operate while reflecting the change. For example, the air conditioning apparatus 100 may operate in advance, while predicting in advance that there will be an increase in the number of persons. The air conditioning apparatus 100 operating based on the predicted schedule information makes it possible to maintain a comfortable temperature at all times.

In addition, it is possible to predict in advance that there will be no persons in an air conditioning target, and thus the power supply to the air conditioning apparatus 100 may be cut off or the output intensity of the air conditioning apparatus 100 may be lowered in advance, thereby saving energy.

Meanwhile, the various embodiments described above may be implemented through a recording medium that is readable by a computer or a similar device by using software, hardware, or a combination thereof. For hardware implementation, the embodiments described which are not part of the invention may be implemented using at least one of application specific integrated circuits (ASICs), digital signal processors (DSPs), digital signal processing devices (DSPDs), programmable logic devices (PLDs), field programmable gate arrays (FPGAs), processors 140, controllers, micro-controllers, micro-processors 140, or other electrical units for performing functions. In some cases, the embodiments described in the specification may be implemented by processors 140 themselves. For software implementation, the embodiments, such as procedures and functions, described in the specification may be implemented by separate software modules. Each of the software modules may perform one or more functions or operations described in the specification.

Meanwhile, computer instructions for performing processing operations of the air conditioning apparatus 100 according to the various embodiments which are not part of the invention described above may be stored in a non-transitory computer-readable recording medium. The computer instructions stored in the non-transitory computer-readable medium may cause a specific device to perform the processing operations of the air conditioning apparatus 100 according to the various embodiments described above when executed by a processor 140 of the specific device.

The non-transitory computer-readable medium refers to a medium that stores data semi-permanently, rather than storing data for a short moment, such as a register, a cache, or a memory 130, and is readable by an apparatus. A specific example of the non-transitory computer-readable medium may include a compact disc (CD), a digital versatile disk (DVD), a hard disk, a Blu-ray disk, a universal serial bus (USB), a memory 130 card, or a ROM.

## Claims

1. An air conditioning apparatus comprising:
a driver (110) configured to perform a predetermined function of the air conditioning apparatus;
a sensor (120) configured to collect ambient environmental information of the air conditioning apparatus;
a memory (130) configured to store a plurality of schedule information for each day of the week and the collected environmental information, wherein the schedule information includes a load information for each time zone, and
a processor (140) configured to:
control the driver based on schedule information corresponding to a current day of the week among the plurality of schedule information,
modify the schedule information based on environmental information collected during a predetermined period, and
control an operation of the driver based on the modified schedule information,
wherein the processor (140) is configured to:
obtain a load for a current time zone based on the load information included in the schedule information,
predict a load for each time zone based on the environmental information for each time zone,
calculate a difference value between the obtained load for the current time zone in the schedule information and the predicted load corresponding to the collected environmental information, and
when the difference value is a predetermined value or more:
modify the schedule information by classifying the collected environmental information as stored in the memory for each time zone, and comparing the classified environmental information for each time zone with an operation state for each time zone in the schedule information, and
modify the operation state for each time zone in the schedule information based on the predicted load for each time zone.

2. The air conditioning apparatus as claimed in claim 1, wherein the processor (140) is configured to predict the operation state for each time zone from the classified environmental information for each time zone using a predetermined learning model.

3. The air conditioning apparatus as claimed in claim 1, wherein the processor (140) is configured to modify the operation state for each time zone in the schedule information by determining an operation mode of the air conditioning apparatus and an output intensity in the operation mode for the each time zone based on the predicted load for each time zone.

4. The air conditioning apparatus as claimed in claim 1, wherein the processor (140) is configured to modify the operation state for each time zone in the schedule information based on the predicted load for each time zone and spatial information of an air conditioning target, and
the environmental information includes the spatial information.

5. The air conditioning apparatus as claimed in claim 1, wherein the environmental information includes at least one of an indoor temperature, an outdoor temperature, a humidity, the number of persons in an air conditioning target, or an amount of dust.

## Patentansprüche

1. Klimaanlage, die Folgendes umfasst:
einen Treiber (110), der so konfiguriert ist, dass er eine vorbestimmte Funktion der Klimaanlage ausführt;
einen Sensor (120), der so konfiguriert ist, dass er Umgebungsinformationen der Klimaanlage erfasst;
einen Speicher (130), der konfiguriert ist, um eine Vielzahl von Zeitplaninformationen für jeden Tag der Woche und die gesammelten Umgebungsinformationen zu speichern, wobei die Zeitplaninformationen eine Lastinformation für jede Zeitzone umfassen,
und
einen Prozessor (140), der konfiguriert ist zum:
Steuern des Treibers auf der Grundlage von Zeitplaninformationen, die einem aktuellen Wochentag aus der Vielzahl der Zeitplaninformationen entsprechen,
Ändern der Zeitplaninformationen auf der Grundlage der während eines vorbestimmten Zeitraums gesammelten Umgebungsinformationen, und
Steuern einer Operation des Treibers auf der Grundlage der geänderten Zeitplaninformationen,
wobei der Prozessor (140) konfiguriert ist, um:
eine Last für eine aktuelle Zeitzone auf der Grundlage der in den Zeitplaninformationen enthaltenen Lastinformationen zu erhalten,
eine Last für jede Zeitzone auf der Grundlage der Umweltinformationen für jede Zeitzone vorherzusagen,
einen Differenzwert zwischen der erhaltenen Last für die aktuelle Zeitzone in der Zeitplaninformation und der vorhergesagten Last entsprechend der gesammelten Umgebungsinformation zu berechnen, und
wenn der Differenzwert einen bestimmten Wert oder mehr beträgt:
die Zeitplaninformationen durch Klassifizieren der gesammelten Umgebungsinformationen, wie sie in dem Speicher für jede Zeitzone gespeichert sind, zu ändern und die klassifizierten Umgebungsinformationen für jede Zeitzone mit einem Betriebszustand für jede Zeitzone in den Zeitplaninformationen zu vergleichen, und
den Betriebszustand für jede Zeitzone in den Zeitplaninformationen auf der Grundlage der vorhergesagten Last für jede Zeitzone zu ändern.

2. Klimaanlagenach Anspruch 1, wobei der Prozessor (140) konfiguriert ist, um den Betriebszustand für jede Zeitzone aus den klassifizierten Umgebungsinformationen für jede Zeitzone unter Verwendung eines vorbestimmten Lernmodells vorherzusagen.

3. Klimaanlage nach Anspruch 1, wobei der Prozessor (140) konfiguriert ist, um den Betriebszustand für jede Zeitzone in den Zeitplaninformationen zu modifizieren, indem ein Betriebsmodus der Klimaanlage und eine Ausgangsintensität in dem Betriebsmodus für jede Zeitzone auf der Grundlage der vorhergesagten Last für jede Zeitzone bestimmt wird.

4. Klimaanlage nach Anspruch 1, wobei der Prozessor (140) konfiguriert ist, um den Betriebszustand für jede Zeitzone in der Zeitplaninformation auf der Grundlage der vorhergesagten Last für jede Zeitzone und der räumlichen Information eines Klimatisierungsziels zu ändern, und
die Umweltinformationen die räumlichen Informationen umfassen.

5. Klimaanlage nach Anspruch 1, wobei die Umgebungsinformationen mindestens eine einer Innentemperatur, einer Außentemperatur, einer Luftfeuchtigkeit, der Anzahl der Personen in einem Klimatisierungsziel oder einer Staubmenge aufweist.

## Revendications

1. Dispositif de climatisation comprenant :
un pilote (110) configuré pour exécuter une fonction prédéterminée du dispositif de climatisation ;
un capteur (120) configuré pour recueillir des informations sur l'environnement ambiant du dispositif de climatisation ;
une mémoire (130) configurée pour stocker une pluralité d'informations de programmation pour chaque jour de la semaine et les informations sur l'environnement collectées, les informations de programmation comprenant des informations de charge pour chaque fuseau horaire,
et
un processeur (140) configuré pour :
commander le pilote sur la base d'informations de programmation correspondant à un jour de la semaine parmi la pluralité d'informations de programmation,
modifier les informations de programmation en fonction des informations sur l'environnement recueillies au cours d'une période prédéterminée, et
commander une opération du pilote sur la base des informations de programmation modifiées,
dans lequel le processeur (140) est configuré pour :
obtenir une charge pour un fuseau horaire actuel sur la base des informations de charge incluses dans les informations de programmation,
prévoir une charge pour chaque fuseau horaire sur la base des informations sur l'environnement pour chaque fuseau horaire,
calculer une valeur de différence entre la charge obtenue pour le fuseau horaire actuel dans les informations de programmation et la charge prévue correspondant aux informations sur l'environnement collectées, et
lorsque la valeur de différence est égale ou supérieure à une valeur prédéterminée :
modifier les informations de programmation en classant les informations sur l'environnement collectées telles que stockées dans la mémoire pour chaque fuseau horaire, et en comparant les informations sur l'environnement classées pour chaque fuseau horaire avec un état de fonctionnement pour chaque fuseau horaire dans les informations de programmation et
modifier l'état de fonctionnement de chaque fuseau horaire dans les informations de programmation en fonction de la charge prévue pour chaque fuseau horaire.

2. Dispositif de climatisation selon la revendication 1, dans lequel le processeur (140) est configuré pour prédire l'état de fonctionnement pour chaque fuseau horaire à partir des informations sur l'environnement classées pour chaque fuseau horaire à l'aide d'un modèle d'apprentissage prédéterminé.

3. Dispositif de climatisation selon la revendication 1, dans lequel le processeur (140) est configuré pour modifier l'état de fonctionnement pour chaque fuseau horaire dans les informations de programmation en déterminant un mode de fonctionnement du dispositif de climatisation et une intensité de sortie dans le mode de fonctionnement pour chaque fuseau horaire sur la base de la charge prédite pour chaque fuseau horaire.

4. Dispositif de climatisation selon la revendication 1, dans lequel le processeur (140) est configuré pour modifier l'état de fonctionnement pour chaque fuseau e horaire dans les informations de programmation en fonction de la charge prédite pour chaque fuseau horaire et des informations spatiales d'une cible de climatisation, et
les informations sur l'environnement comprennent les informations spatiales.

5. Dispositif de climatisation selon la revendication 1, dans lequel les informations sur l'environnement comprennent au moins l'un d'une température intérieure, d'une température extérieure, d'une humidité, du nombre de personnes dans une cible de climatisation, ou d'une quantité de poussière.
